# EUROPÄISCHE PATENTSCHRIFT

(11) **EP 2 703 059 B1**
(45) Veröffentlichungstag und Bekanntmachung des Hinweises auf die Patenterteilung: **20.12.2017**
(21) Anmeldenummer: 13178435.7
(22) Anmeldetag: 30.07.2013
(51) Int. Cl.: B01D 46/00, B01D 46/24, B01D 46/52

(54) **Filteranordnung und Verfahren zum Herstellen einer Filteraufnahme**
Filter assembly and method for producing a filter holder
Agencement de filtration et procédé de fabrication d'un logement de filtre

(30) Priorität: 28.08.2012 DE 102012016955
(43) Veröffentlichungstag der Anmeldung: 05.03.2014
(73) Patentinhaber: MANN + HUMMEL GMBH, 71636 Ludwigsburg (DE)
(72) Erfinder: Kaufmann, Michael, 67149 Meckenheim (DE); Ruhland, Klaus-Dieter, 67149 Meckenheim (DE)

(56) Entgegenhaltungen:
- DE-A1- 1 802 909
- FR-A- 1 071 848
- US-A- 4 312 651
- US-A- 5 174 896
- US-A1- 2006 183 619
- US-B1- 6 958 083

## Beschreibung

### Technisches Gebiet

Die vorliegende Erfindung betrifft eine Filteranordnung und ein Verfahren zum Herstellen einer Filteraufnahme. In einer Filteraufnahme oder einem Filtergehäuse werden Filterelemente aufgenommen, so dass insgesamt ein Filtersystem oder eine Filteranordnung entsteht.

### Stand der Technik

Aus dem Kraftfahrzeugbereich sind insbesondere Rundluftfilter bekannt, bei denen ein im Wesentlichen zylinderförmiges Gehäuse ein oder mehrere Filterelemente mit einem Filtermedium aufnimmt. Zu filterndes Fluid, wie insbesondere verschmutzte Verbrennungsluft, durchströmt radial das Filtermedium von innen nach außen oder von außen nach innen durch ein Filtermedium und wird dann der Brennkraftmaschine zugeführt. Es ist bei entsprechenden Filteranordnungen wünschenswert, den Durchflusswiderstand gering zu halten. Gleichzeitig soll der Einbauraum der weitestgehend durch den Durchmesser des zylindrischen Gehäuses vorgegeben ist, möglichst klein sein. Um den Anforderungen an eine schmutzfreie Verbrennungsluft zu genügen, sind zudem mehrstufige Filteranordnungen eingesetzt worden, bei denen beispielsweise eine Zyklonvorabscheidung in das Gehäuse integriert ist. Derartige Maßnahmen beschränken die Geometrie und Einbauorientierung entsprechender Filtergehäuse und -anordnungen.

Aus der DE 1 802 909 A1 ist eine Reinigungsvorrichtung für strömende Medien bekannt, die eine Leitflügelanordnung innerhalb des Einlassrohres aufweist.

Aus der US 4,312,651 A ist ein Luftfiltergehäuse mit einer federgestützten Halteplatte für ein Filterelement bekannt.

Aus der US 6 958 083 B1 ist ein Luftfiltergehäuse mit einer Rampe bekannt zur Leitung von Luft entlang einer schraubenförmigen Form.

Aus der FR 1 071 848 A ist ein Filter mit tangentialer Einströmung bekannt.

### Offenbarung der Erfindung

Es ist daher eine Aufgabe der vorliegenden Erfindung, alternative oder verbesserte Filteranordnungen bereitzustellen, welche einfach herzustellen sind.

Demgemäß wird eine Filteranordnung mit einer Filteraufnahme und einem in der Filteraufnahme angeordneten, insbesondere runden Filterelement vorgeschlagen. Dabei umfasst die Filteraufnahme ein Gehäuse mit einem im Wesentlichen zylinderförmigen Gehäuseteil mit einer Mantelfläche, eine in der Mantelfläche angeordnete Einströmöffnung, einen an der Einströmöffnung befestigten Einströmstutzen zum Ankoppeln einer Fluidzuleitung und eine insbesondere axiale Ausströmöffnung, wobei der Einströmstutzen bevorzugt einen sich in Strömungsrichtung erweiternden Strömungsquerschnitt aufweist.

Die Filteraufnahme hat erfindungsgemäß ein im Wesentlichen zylinderförmiges Gehäuseteil mit einer Mantelfläche, und der Einströmstutzen ist tangential an der Mantelfläche vorgesehen. Dabei strömt beispielsweise Rohfluid tangential, also in einem Winkel um ca. 90° zur Radialrichtung, in die Filteraufnahme ein und strömt kreis- oder wirbelförmig zwischen der Innenseite der Mantelfläche und einem Filterelement. Dadurch kann eine Fliehkraftabscheidung erzielt werden. Man spricht auch von einer Zyklonvorfilterung. In Kombination mit einem sich in Richtung zum Innenraum erweiternden Querschnitt des Einströmstutzens kann ein noch besserer Vorabscheidegrad erzielt werden.

Erfindungsgemäß hat der Einströmstutzen eine Befestigungsfläche, welche auf einer Außenseite des Gehäuses befestigt ist und die Einströmöffnung abdeckt. Beispielsweise kann der Einströmstutzen eine Platte mit einem abstehenden hülsenförmigen Kanal umfassen. Die Einströmöffnung kann insbesondere eckig oder unregelmäßig geformt sein und wird von der Platte oder Abdeckfläche bedeckt. Es lässt sich einfach, beispielsweise bei vorgefertigten Gehäuseteilen, eine jeweilige Öffnung vorsehen, welche von dem vorgefertigten Einströmstutzen abgedeckt wird. Vorteilhaft ist die Einströmöffnung spiegelsymmetrisch zu einer Ebene, die durch die Mittelachse eines Gehäuses mit insbesondere hohlzylindrischer Form und/oder die Mittelachse des Filterelements verläuft. So kann ein Einströmstutzen zur tangentialen Anströmung mit einer Befestigungsfläche in korrespondierender Form jeweils in zwei Richtungen montiert werden, so dass je nach Anwendung eine tangentiale Anströmung mit oder entgegen dem Uhrzeigersinn realisiert werden kann.

Erfindungsgemäß hat der Einströmstutzen einen durch die Einströmöffnung in den Innenraum des Gehäuses reichenden Strömungsleitabschnitt. Der Strömungsleitabschnitt führt beispielsweise zu einer Verwirbelung oder besonders günstigen Anströmung des im Gehäuse vorgesehenen Filterelementes.

Dabei ragt der Strömungsleitabschnitt im Wesentlichen bis an das Filterelement oder einen das Filterelement insbesondere ringförmig umgebenden Anströmschutz heran. Dabei ist das Ende oder die Abschlusskante des Strömungsleitabschnittes weiter bevorzugt weniger als einen cm, besonders bevorzugt weniger als einen halben cm von der Außenfläche des Filterelementes bzw. des Anströmschutzes entfernt. Der Anströmschutz kann dabei insbesondere als zylinder- oder hülsenförmige Zarge ausgebildet sein, die am Gehäuse angeordnet ist und das Filterelement umgibt oder alternativ Teil des Filterelements ist. Durch den bis an das Filterelement bzw. den Anströmschutz heranragenden Strömungsleitabschnitt ergibt sich der Vorteil, dass eine tangentiale Anströmung gleichmäßig in eine rotierende Strömung übergeht.

Der Strömungsquerschnitt vergrößert sich insbesondere in der Strömungsrichtung, welche radial zu einer zylindrischen Gehäuseform sein kann. Ein sich ändernder Strömungsquerschnitt am Einströmstutzen, beispielsweise sich zum Innenraum des Gehäuses erweiternd, führt zu einem geringeren Durchflusswiderstand des Rohfluids, wie z. B. mit Staub belegter Luft.

In Ausführungsformen der Filteraufnahme ist der Einströmstutzen an dem Gehäuse angeschweißt. Bei konventionellen Filteranordnungen oder Filteraufnahmen wird der Einströmstutzen häufig als Teil des Gehäuses gefertigt. Durch die separate Ausführung des Einströmstutzens und des Gehäuses, beispielsweise als Kunststoffformteile, ist eine flexiblere Herstellung möglich. Außerdem kann die Form des Einströmstutzens beispielsweise konisch zulaufend flexibel an die jeweiligen Einbau- oder Betriebssituation des Filters angepasst werden. Die getrennte Ausführung von Einströmstutzen und Gehäuse vereinfacht ferner die Lagerhaltung von Halbfertigteilen. Außerdem kann der Einströmstutzen auch mit komplexen Geometrien einfach an das Gehäuse angebracht werden. Beispielsweise kann der Einströmstutzen angeschweißt, angeklebt oder mit Hilfe anderer bekannter Maßnahmen am Gehäuse befestigt werden.
Bei einer Ausführungsform der Filteraufnahme ist die Filteraufnahme als ein mehrteiliges Gehäuse zur Aufnahme von mindestens einem im Wesentlichen rotationssymmetrischen Filterelement ausgebildet. Rotationssymmetrische Filterelemente sind z. B. als Endlosfaltenbalge ausgeführt. Filteraufnahmeachse und Filterelementachse sind dann koaxial zueinander ausgerichtet. Beispielsweise ergibt sich ein mehrteiliges Gehäuse in der Art eines Zylinders mit Kopfseiten und einem Zylindermantel. Koaxial kann zudem ein Rohluftstutzen angeordnet werden, so dass beim Betrieb Fluid im Wesentlichen von außen nach innen radial durch das entsprechende Filterelement tritt und gereinigt wird. Das Gehäuse kann zur Zyklonvorabscheidung ausgebildet sein. Eine Kopfseite des Gehäuses ist z. B. als Gehäusedeckel mit Verschlussmitteln ausgebildet.

In Ausführungsformen der Filteraufnahme ist ein Strömungsquerschnitt in einem Übergangsbereich zwischen dem Einströmstutzen und dem Gehäuse größer als in einem distalen Ankoppelbereich des Einströmstutzens für die Fluidzuleitung. Insofern erweitert sich der Strömungsquerschnitt des Einströmstutzens in Richtung zum Innenraum des Gehäuses. Es kann beispielsweise eine konische Geometrie des Einströmstutzens realisiert werden. Ein sich in Richtung zum Innenraum erweiternder Querschnitt hat den Vorteil, dass der Druckverlust bei der Einströmung sinkt.

Der Einströmstutzen verläuft vorzugsweise im Wesentlichen außerhalb der Filteraufnahme, und der distale Ankoppelbereich hat einen kreisrunden Querschnitt. So können beispielsweise Zuleitungen, Schläuche oder Rohre leicht mit dem Einströmstutzen gekoppelt werden.

In Ausführungsformen der Filteraufnahme umfasst die Filteraufnahme ausschließlich ein erstes Kunststoffformteil als Gehäuse, ein zweites Kunststoffformteil als Gehäusedeckel, Fixiermittel zum Befestigen des Gehäusedeckels an dem Gehäuse und ein drittes Kunststoffformteil als Einströmstutzen. Als Fixiermittel kommen beispielsweise Schnapper, Rastmittel, Bajonettverschlüsse, Schraubverbindungen oder dergleichen in Frage.

Ferner wird eine Filteranordnung mit einer Filteraufnahme, welche ein Gehäuse umfasst, das eine Einströmöffnung aufweist, und ein an der Einströmöffnung befestigter Einströmstutzen zum Ankoppeln einer Fluidzuleitung vorgeschlagen. Dabei hat der Einströmstutzen einen sich in Strömungsrichtung ändernden Strömungsquerschnitt. Die Filteranordnung umfasst außerdem ein in der Filteraufnahme angeordnetes Filterelement, welches einen im Wesentlichen zylinderförmigen Endlosfaltenbalg mit einem zickzackförmig gefalteten Filtermedium aufweist.

Das Filterelement kann insbesondere einen zylinderförmigen Endlosfaltenbalg aufweisen, wobei das Filtermedium abwechselnd unterschiedlich breite Faltabschnitte hat. Es ergeben sich abwechselnd innere Faltkanten, welche auf einer inneren Umfangslinie verlaufen, und äußere Faltkanten, welche auf einer äußeren Umfangslinie verlaufen. Dadurch, dass die Faltabschnitte abwechselnd unterschiedlich breit sind, ergibt sich eine Art Sägezahnfaltung und auf einem Zylindermantel verlaufende Einströmtaschen, welche gegenüber der Radialrichtung geneigt sind. Insofern wird bei der Filteranordnung und einem entsprechend ausgestalteten Filterelement ausgenutzt, dass einerseits, beispielsweise durch tangentiale Einströmung der Luft in den Zwischenraum zwischen Filterelement und äußerer Mantelfläche des Gehäuses, eine Wirbelströmung entsteht und andererseits ein leichter Eintritt des zu filternden Fluids oder der Rohluft in die geneigten Filtertaschen der Sägezahnfaltung erfolgen kann.

Es wird außerdem ein Verfahren zum Herstellen einer Filteraufnahme vorgeschlagen. Dabei wird insbesondere eine Filteraufnahme und/oder eine Filteranordnung wie vorbeschrieben hergestellt. Das Verfahren umfasst: Bereitstellen eines Gehäuses, Schaffen einer Einströmöffnung in dem Gehäuse, und Befestigen, insbesondere Schweißen, eines Einströmstutzens an der Öffnung.

Die Einströmöffnung kann beispielsweise gestanzt, geschnitten oder gefräst werden. Bei dem Verfahren ergibt sich eine effiziente Abfolge von Verfahrensschritten, da beispielsweise ein Standardgehäuse in der Art eines Zylinders mit einem Zylindermantel vorgehalten wird und je nach Einsatz und Verwendung der Filteraufnahme ein passender Einströmstutzen an der Öffnung angebracht wird. Das Anbringen oder Befestigen erfolgt insbesondere durch Schweißen oder aber auch Kleben oder andere Befestigungsmethoden.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert.

### Kurze Beschreibung der Zeichnungen

Es zeigen dabei:
- Fig. 1:: eine perspektivische Ansicht einer ersten Ausführungsform einer Filteraufnahme und Filteranordnung;
- Fig. 2:: eine perspektivische Ansicht eines Gehäuseteils der Filteranordnung gemäß Fig. 1;
- Fig. 3:: eine perspektivische Ansicht eines Einströmstutzens der Filteranordnung gemäß Fig. 1;
- Fig. 4, 5:: Seitenansichten der Filteranordnung gemäß Fig. 1;
- Fig. 6:: eine Querschnittsansicht der Filteranordnung gemäß Fig. 1;
- Fig. 7:: eine ausgebrochene perspektivische Darstellung der Filteranordnung gemäß Fig. 1;
- Fig. 8:: eine perspektivische Ansicht einer zweiten Ausführungsform einer Filteraufnahme und Filteranordnung;
- Fig. 9, 10:: perspektivische Darstellungen von Ausführungsformen von Filterelementen zum Einsatz in einer Filteranordnung;
- Fig. 11:: eine ausgebrochene perspektivische Darstellung der Filteranordnung gemäß Fig. 8; und
- Fig. 12:: eine Querschnittsansicht der Filteranordnung gemäß Fig. 8.

In den Figuren bezeichnen dieselben Bezugszeichen gleiche oder funktionsgleiche Elemente, soweit nichts Gegenteiliges angegeben ist.

### Ausführungsform(en) der Erfindung

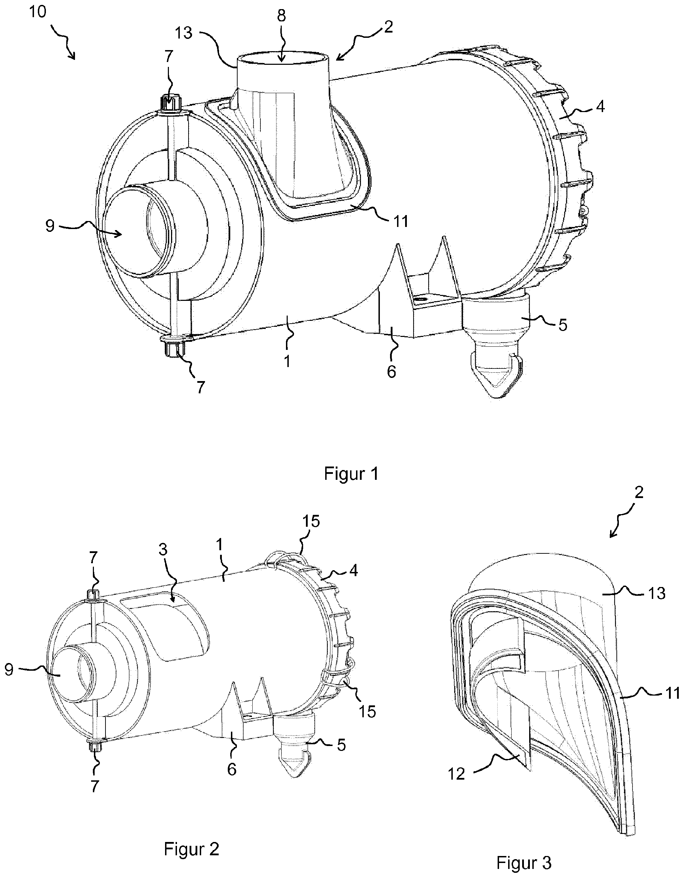

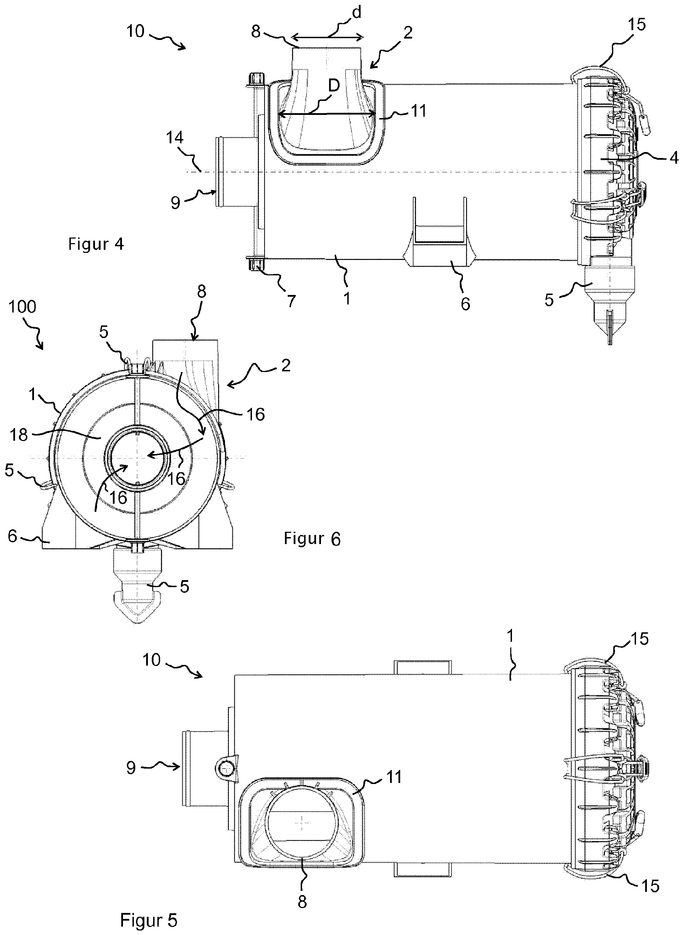

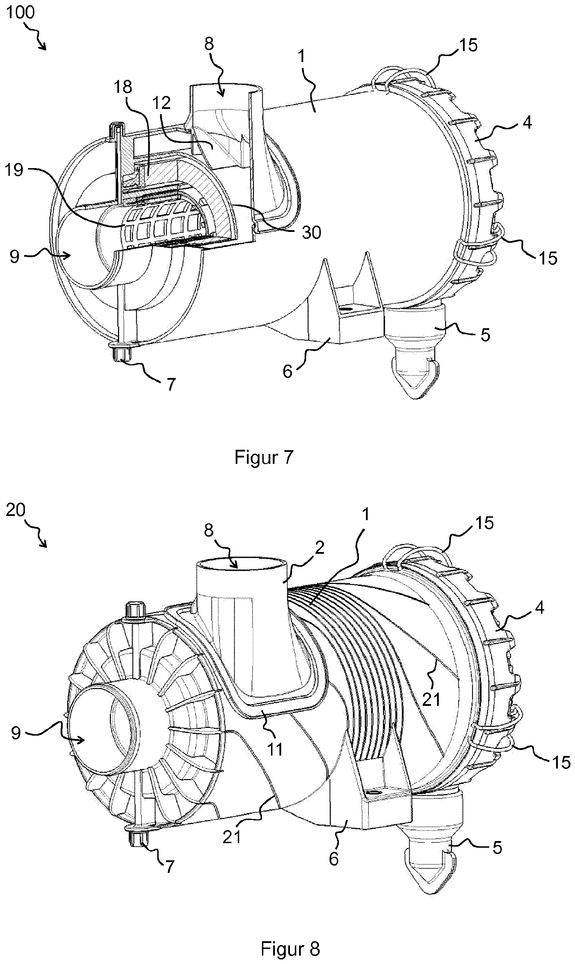

Die Fig. 1 zeigt eine perspektivische Ansicht einer ersten Ausführungsform einer Filteraufnahme und einer Filteranordnung. In den Fig. 2 und 3 sind perspektivische Darstellungen von Gehäuseteilen, wie dem Filtergehäuse und -deckel sowie einem einzelnen Einströmstutzen dargestellt. Die Fig. 4 und 5 zeigen Seitenansichten der Filteraufnahme, und Fig. 7 eine ausgebrochene perspektivische Darstellung einer entsprechenden Filteranordnung mit einem eingesetzten Filterelement.

Man erkennt zunächst in Fig. 1 perspektivisch die Filteraufnahme 10. Dabei ist die Filteraufnahme 10 aus einem im Wesentlichen zylindrischen Gehäuseteil 1 und einem Gehäusedeckel 4 gebildet. Die Gehäuseteile sind beispielsweise Kunststoffformteile und können in einem Spritzgussverfahren oder anderen bekannten Herstellungsprozessen gefertigt werden. An der Außenseite des Gehäuseteils 1 ist ein Einströmstutzen 2 angebracht. Der Einströmstutzen 2 umfasst einen von dem Gehäuse 1 abstehenden Zylinderabschnitt 13, der von einer Befestigungsfläche 1 absteht. Rohluft tritt durch eine Anschlussöffnung 8 am Einströmstutzen 2 ein, und Reinluft wird an einer Ausströmöffnung 9 entnommen. Zusammen mit einem im Gehäuse 1 vorgesehenen Filterelement ergibt sich eine Filteranordnung oder ein Filtersystem.

In der Fig. 3 erkennt man die geschwungene Befestigungsfläche 11, welche sich auf die Oberfläche des Gehäuses 1 anschmiegt und damit beispielsweise mit Hilfe eines Schweißverfahrens verbunden ist. Außerdem reicht ein Leitabschnitt 12 durch eine Einströmöffnung 3 in dem Gehäuseteil 1 in den Innenraum des Gehäuses 1.

Die Fig. 2 zeigt das Gehäuse ohne Einströmstutzen 2. An dem Gehäuseteil 1 sind ferner Befestigungsabschnitte 6, 7 vorgesehen, die dazu dienen, das Gehäuse 1 bzw. die gesamte Filteraufnahme 10 an einem Fahrzeug zu befestigen. Das Gehäuse 1 ist in der Art eines Zylinders mit jeweils einer Deckfläche ausgeführt, wovon eine Deckfläche durch den Gehäusedeckel 4 gebildet ist. Der Gehäusedeckel 4 ist über Klammern 15 mit dem Zylindermantel verbunden.

In der Orientierung der Fig. 1 ist dem Betrachter links zugewandt eine Ausströmöffnung 9 für gefiltertes Fluid. Beim Betrieb der als Rundluftfilter ausgeführten Filteranordnung strömt Rohfluid beispielsweise mit staubbelegter Luft durch die Anschlussöffnung 8 am Einströmstutzen 2 in den Innenraum des Gehäuses 1, durchströmt radial ein Filtermedium und tritt gereinigt entlang der Längsachse 14 des Filtergehäuses 1 bzw. der Filteraufnahme 10 aus.

In der Fig. 6 ist eine Querschnittsansicht senkrecht zur Längsachse 14 der Filteranordnung mit einer Filteraufnahme, wie sie in der Fig. 1 gezeigt ist, und einem eingesetzten Filterelement 18 dargestellt. Der Einströmstutzen 2 ist dabei derart an die Zylindermantelfläche des Gehäuses 1 angebracht, dass zunächst Rohluft tangential in den Zwischenraum zwischen dem zylinderförmigen Filterelement 18 und der Gehäusewand eintritt. Das Filterelement 18 kann beispielsweise als Endlosfaltenbalg mit einem zickzackförmig gefalteten Filtermedium, wie beispielsweise Filtervlies oder Filterpapier, ausgestaltet sein. Die zu reinigende Rohluft wird einerseits in der Orientierung der Fig. 6 im Uhrzeigersinn an der Innenwand des Gehäuses 1 entlanggeführt, so dass aufgrund der entstehenden Zentrifugalkräfte grobe Staubpartikel an die Innenwand gedrückt werden. Die Strömung ist mit Pfeilen 16 angedeutet. Insofern erfolgt eine Vorabscheidung in der Art eines Fliehkraftabscheiders, und abgeschiedene Partikel sammeln sich im unteren Bereich des Filtergehäuses 1. Um den gesammelten Staub zu entnehmen, ist ein Staubaustrag 5 vorgesehen.

Ferner erfolgt aufgrund der Druckdifferenzen ein Durchströmen des Filterelementes 18 im Wesentlichen radial von außen nach innen. Dies ist ebenfalls durch die Pfeile 16 angedeutet. Entlang der Längsachse 14 kann dann gereinigtes Fluid an der Ausströmöffnung 9 beispielsweise einer Brennkraftmaschine zugeführt werden.

In der Fig. 7 ist eine ausgebrochene perspektivische Darstellung der Filteranordnung 100 aus einem Gehäuse 1 und einem geeigneten Filterelement 18 dargestellt. Man erkennt insbesondere in der Zusammenschau mit der Fig. 4, dass der Einströmstutzen 2 eine kreisrunde Anschlussöffnung 8, beispielsweise für einen Luftanschlussschlauch, umfasst, der einen geringeren Durchmesser d hat als der Übergangsbereich zum Gehäuse 1. Unter Übergangsbereich wird der Bereich des Einströmstutzens 2 verstanden, der an den Rand der Einlassöffnung 3 des Gehäuses 1 anschmiegt. Insofern ergibt sich ein größerer Strömungsquerschnitt mit einem Durchmesser D hin zum Innenraum des Gehäuses 1 als an dem Anschluss 8 des Stutzens (d < D). Durch die Verbreiterung des Strömungsquerschnitts ergibt sich ein geringerer Druckverlust beim Einströmen des Rohfluids in den Innenraum der Filteranordnung 100.

In der Fig. 7 ist eine Konfiguration einer Filteranordnung 100 dargestellt, die mehrere Filterelemente umfasst. Dabei ist, wie in der Fig. 6 angedeutet, ein Hauptelement 18 zylindrisch in den Innenraum des Gehäuses 1 eingepasst. Zur Halterung des zylindrischen Primär- oder Hauptelementes 8 ist eine zylinder- oder hülsenförmige Zarge 30 vorgesehen, in die kopfseitig das Filterelement 18 eingesetzt ist. Es ergibt sich insofern ein Zwischenraum zwischen der Zarge 30 und der Innenwand des Gehäuses 1. An dem Einströmstutzen 2 ist zusätzlich ein in Richtung zu der Zarge 30 verlaufender Leitabschnitt 12 vorgesehen. Dadurch wird ein besonders günstiges Einströmen und Umströmen der Zarge 30, in der Orientierung der Fig. 7 im Uhrzeigersinn, der Rohluft erzielt. Um das Filterergebnis weiter zu verbessern, ist innerhalb des zylinderförmigen Hauptfilterelements 18 ein Sekundärelement vorgesehen, das einen Stützkörper 19 innen umfasst. Der Stützkörper 19 ist fluid- oder luftdurchlässig und dient als Träger und Haltemittel für ein darum angeordnetes Filtermedium.

Schließlich strömt das gereinigte Fluid bzw. die Reinluft durch die Abströmöffnung 9 entlang der Längsachse 14 aus der Filteranordnung 100 heraus. Mit Hilfe des sich erweiternden Einströmstutzens 8 ergibt sich gegenüber zylindrischen Stutzen ein geringerer Durchflusswiderstand beim Einströmen der Rohluft in die Filteranordnung. Ferner kann der Einströmstutzen durch die getrennte Ausführung von Filtergehäuse 1 und Einströmstutzen 2 flexibel angepasst werden.

Bei der Herstellung wird zunächst das Filtergehäuse vorgehalten, dann mit einer Öffnung versehen, beispielsweise gestanzt oder geschnitten, und anschließend der Filterstutzen mit seiner Befestigungsfläche 11 angeschweißt.

Die tangentiale Anordnung des Einströmstutzens, also in einem Winkel zur Radialen des zylinderförmigen Filtersystems, ergibt sich auch bei einstufigen Filtern eine gute Durchströmung und Reinigung von Fluid. Das zylinderförmige Gehäuseteil 1 kann als ein Kunststoffformteil gefertigt werden, so dass auf Schweißungen am Gehäusemantel verzichtet werden kann. Insofern lässt sich die Herstellung der gesamten Filteranordnung vereinfachen.

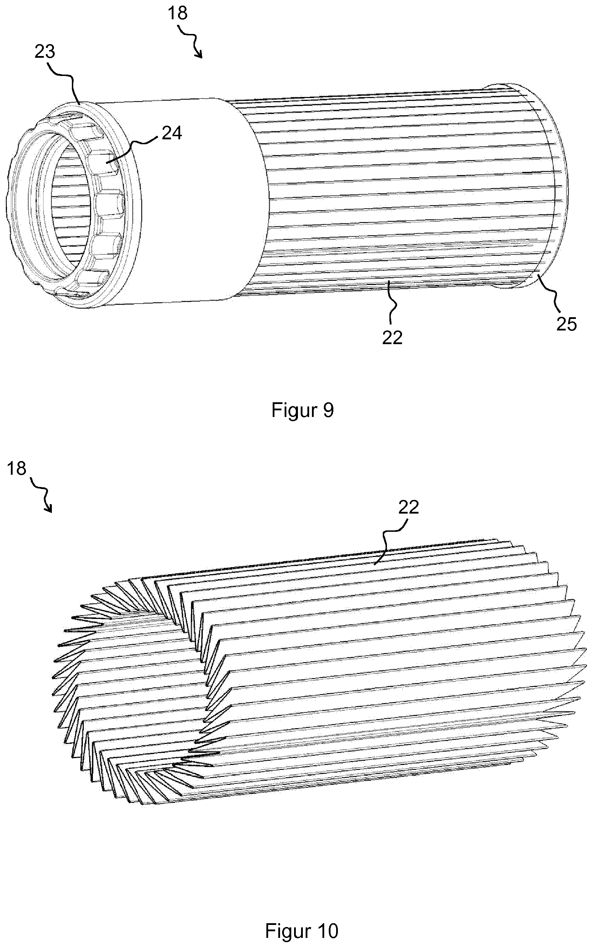

Die Fig. 8 bis 12 zeigen verschiedene Darstellungen einer zweiten Ausführungsform einer Filteranordnung und ihre Bestandteile. In der Fig. 8 ist eine perspektivische Darstellung einer Filteranordnung bzw. Filteraufnahme 20 dargestellt. Dabei ist wiederum ein zylindrisches Gehäuseteil 1 vorgesehen, welches in der Orientierung der Fig. 8 hinterseitig mit einem Gehäusedeckel 4 verschlossen ist, welcher mit Klammern oder Spannern 15 die Zylinderkopfseite schließt. In der Orientierung der Fig. 9 vorderseitig ist die Kopfseite des Gehäuses 1 mit der Ausströmöffnung 9 versehen. Ein sich in Richtung zum Innenraum des Filtergehäuses 1 verbreiternder Einströmstutzen 2 ist mit Hilfe der Befestigungs- oder Auflagefläche 11 an dem Gehäuse 1 angeschweißt. Durch den Einströmstutzen 2 bzw. dessen Anschlussöffnung 8 strömt Rohfluid in den Innenraum des Gehäuses 1 und wird dort mit Hilfe eines Endlosfaltenbalges gefiltert und als Reinluft an der Ausströmöffnung 9 abgegeben.

Die Fig. 8 zeigt ferner Verstärkungsrippen 21 des Gehäuses 1 und einen Staubaustrag 5, um die in der Zyklonvorfilterung angesammelten Partikel zu entnehmen. Der Einströmstutzen 2 ist tangential an der Mantelfläche des zylinderförmigen Gehäuses 1 angebracht, so dass das Rohfluid zunächst in der Orientierung der Fig. 8 im Uhrzeigersinn in dem Gehäuse 1 strömt. Im Innenraum des Gehäuses 1 ist ein zickzackförmig gefalteter Endlosfaltenbalg als Filterelement eingesetzt.

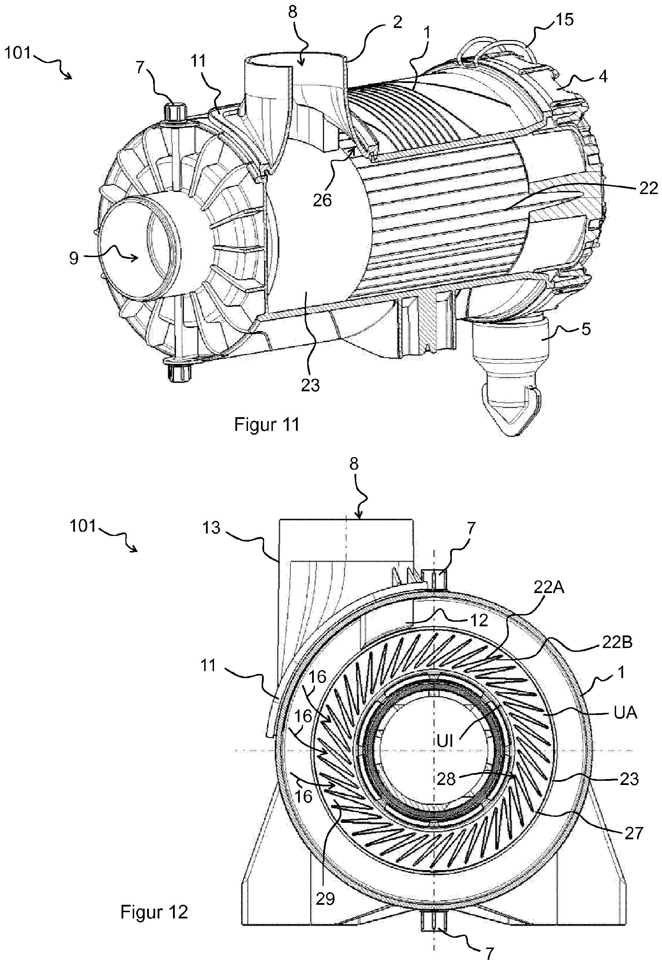

In den Fig. 9 und 10 sind Details des Filterelementes 18 dargestellt. In der Fig. 10 ist ein Endlosfaltenbalg aus zickzackförmig gefaltetem flächigen Filtermaterial, wie beispielsweise einem Filtervlies, angedeutet. An den Stirnseiten des Endlosfaltenbalges 22, wie er in der Fig. 10 dargestellt ist, werden Endscheiben angeordnet (vgl. Fig. 9). Eine hinterseitige Endscheibe 25 stabilisiert die Faltkanten und ist mit den Faltungen verschweißt oder verklebt. In der Orientierung der Fig. 9 links ist ein Kopplungsring 23, welcher die Faltungen umschließt, vorgesehen. Ferner ist der Kopplungsring 23 mit Ausnehmungen 24 zur Verdrehsicherung versehen. Die Ausnehmungen 24 werden im eingebauten Zustand, wie er in der Fig. 11 dargestellt ist, gegen entsprechende Rippen an der linksseitigen Kopfseite des Gehäuses 1 gedrückt, so dass das Filterelement fixiert wird.

In der ausgebrochenen perspektivischen Darstellung der Fig. 11 sieht man insbesondere, dass im Übergangsbereich 26 zwischen Einströmstutzen 2 und dem Gehäuse 1 der Querschnitt verbreitert ist. Dabei umläuft die Befestigungsplatte oder Befestigungsfläche 11 des Einströmstutzens 2 die entsprechende Einlassöffnung im Gehäuse 1. Um die Strömungsverhältnisse insbesondere beim Einströmen, also im Zwischenraum zwischen dem Filterelement 18 bzw. dem Endlosfaltenbalg 22 und der Innenseite des Gehäuses 1, zu verbessern, hat der Faltenbalg zickzackförmige Sägezahnfaltungen. D. h., es sind jeweils abwechselnd unterschiedlich breite Faltabschnitte vorgesehen.

Im Querschnitt der Fig. 12 erkennt man, dass die tangential einströmende Luft in der Orientierung der Fig. 12 gegen den Uhrzeigersinn zunächst entlang der Innenseite des Gehäuses 1 strömt und in schräggestellte Taschen 29 des Endlosfaltenbalges 18 eindringt. Die Taschen bzw. Zwischenräume zwischen äußeren Faltkanten 27 und inneren Faltkanten 28 sind mit dem Bezugszeichen 29 versehen. Da abwechselnd unterschiedlich breite Faltabschnitt 22A, 22B vorgesehen sind, ergibt sich eine Schrägstellung der Faltentäler bzw. der Einströmtaschen 29. Der Endlosfaltenbalg 22 besteht jeweils aus breiten Faltabschnitten 22A, und schmalen Faltabschnitten 22B. Dadurch ergeben sich äußere Faltkanten 27 und innere Faltkanten 28. Die inneren Faltkanten 28 umlaufen dabei im Querschnitt eine innere Umfangslinie UI, und die äußeren Faltkanten 27 eine äußere Umfangslinie UA. Durch die unterschiedliche Faltabschnittbreite ergibt sich die Schrägstellung, welche als Sägezahnfaltung bezeichnet werden kann, so dass direkt die mit Staub beladene Luft in die Faltentaschen 29 eindringt.

Im Zusammenspiel insbesondere mit einem tangential angeordneten Einströmstutzen 2 ergibt sich ein rotierender Luftstrom um die Innenseite des zylinderförmigen Gehäusemantels 1 und ein erleichtertes Eindringen der Luft in den Endlosfaltenbalg. Man erhält somit eine verbesserte Nutzung der kinetischen Energie der einströmenden Luft und damit einen geringeren Druckabfall beim Filtern mit Hilfe der vorgeschlagenen Filteranordnungen. Außerdem ist eine Herstellung vereinfacht, da der Einströmstutzen und das Filtergehäuse getrennt gefertigt werden und anschließend miteinander verschweißt oder verklebt werden. Dadurch lassen sich einfachere Geometrien im Spritzgussverfahren realisieren.

Obwohl die vorliegende Erfindung anhand verschiedener Ausführungsbeispiele beschrieben wurde, ist sie darauf nicht beschränkt, sondern auf vielfältige Weise modifizierbar.

## Patentansprüche

1. Filteranordnung (100) umfassend eine Filteraufnahme (10) und ein in der Filteraufnahme (10) angeordnetes rundes Filterelement (18), wobei die Filteraufnahme (10) ein Gehäuse (1) mit einem im Wesentlichen zylinderförmigen Gehäuseteil (1) mit einer Mantelfläche,
eine in der Mantelfläche angeordnete Einströmöffnung (3)
einen an der Einströmöffnung (3) befestigten Einströmstutzen (2) zum Ankoppeln einer Fluidzuleitung, wobei der Einströmstutzen (2) eine Befestigungsfläche (11) umfasst, welche auf einer Außenseite des Gehäuses (1) befestigt ist und die Einströmöffnung (3) abdeckt,
und eine insbesondere axiale Ausströmöffnung (9) umfasst, **dadurch gekennzeichnet, dass** der Einströmstutzen (2) tangential an der Mantelfläche vorgesehen ist und einen durch die Einströmöffnung (3) in den Innenraum des Gehäuses (1) reichenden Strömungsleitabschnitt (12) aufweist wobei der Strömungsleitabschnitt (12) bis an das Filterelement oder einen das Filterelement insbesondere ringförmig umgebenden Anströmschutz heran ragt.

2. Filteranordnung nach Anspruch 1, wobei der Einströmstutzen (2) einen sich in Strömungsrichtung erweiternden Strömungsquerschnitt aufweist.

3. Filteranordnung (100) nach Anspruch 1 oder 2, wobei der Einströmstutzen (2) an dem Gehäuse (1) angeschweißt oder angeklebt ist.

4. Filteranordnung (100) nach einem der Ansprüche 1 bis 3, wobei die Filteraufnahme (10) als ein mehrteiliges Gehäuse zur Aufnahme mindestens eines im Wesentlichen rotationssymmetrischen Filterelements (18) ausgebildet ist.

5. Filteranordnung (100) nach einem der Ansprüche 1 bis 4, wobei ein Strömungsquerschnitt in einem Übergangsbereich (26) zwischen dem Einströmstutzen (2) und dem Gehäuse (1) größer ist als in einem distalen Ankoppelbereich des Einströmstutzens (2) für die Fluidzuleitung.

6. Filteranordnung (100) nach einem der vorhergehenden Ansprüche, wobei die Filteraufnahme (10) ausschließlich ein erstes Kunststoffformteil als Gehäuse (1), ein zweites Kunststoffformteil als Gehäusedeckel (4), Fixiermittel (15) zum Befestigen des Gehäusedeckels (4) an dem Gehäuse (1), und ein drittes Kunststoffformteil als Einströmstutzen (2) umfasst.

7. Filteranordnung nach einem der vorhergehenden Ansprüche, wobei ein Anströmschutz vorgesehen ist, der als zylinder- oder hülsenförmige Zarge ausgebildet ist und das Filterelement umgibt und entweder am Gehäuse angeordnet ist oder Teil des Filterelements ist.

8. Filteranordnung (100) nach einem der vorhergehenden Ansprüche, wobei das Filterelement einen im Wesentlichen zylinderförmigen Endlosfaltenbalg (22) mit einem zickzackförmig gefaltetem Filtermedium aufweist, wobei das Filtermedium abwechselnd unterschiedlich breite Faltabschnitte (22A, 22B) derart hat, dass abwechselnd innere Faltkanten (28) auf einer inneren Umfangslinie (UI) verlaufen und äußere Faltkanten (27) auf einer äußeren Umfangslinie (UA) verlaufen.

9. Verfahren zum Herstellen einer Filteraufnahme (10) für eine Filteranordnung (100) nach einem der vorhergehenden Ansprüche, umfassend: Bereitstellen eines Gehäuses (1); Schaffen einer Einströmöffnung (3) in dem Gehäuse (3); und Befestigen, insbesondere Schweißen, des Einströmstutzens (2) an der Öffnung (3).

## Claims

1. Filter arrangement (100) comprising a filter seat (10) and a round filter element (18) disposed in the filter seat (10), wherein the filter seat (10) comprises a housing (1) with a substantially cylindrical housing component (1) with a circumferential surface,
an inflow opening (3) disposed in the circumferential surface,
an inlet stub (2) attached to the inflow opening (3) for coupling a fluid supply line, wherein the inlet stub (2) comprises a fixing surface (11) which is attached to an exterior side of the housing (1) and covers the inflow opening (3),
and an in particular axial outflow opening (9), **characterized in that** the inlet stub (2) is provided tangentially at the circumferential surface and features a flow guiding section (12) extending through the inflow opening (3) into the interior space of the housing (1), wherein the flow guiding section (12) extends up to the filter element or to an inflow protection surrounding the filter element in particular annularly.

2. Filter arrangement according to claim 1, wherein the inlet stub (2) features a flow cross-section diverging in flow direction.

3. Filter arrangement (100) according to claim 1 or 2, wherein the inlet stub (2) is welded or glued to the housing (1).

4. Filter arrangement (100) according to one of the claims 1 to 3, wherein the filter seat (10) is designed as a multipart housing for receiving at least one substantially rotationally symmetric filter element (18).

5. Filter arrangement (100) according to one of the claims 1 to 4, wherein a flow cross-section is larger in a transition area (26) between the inlet stub (2) and the housing (1) than in a distal coupling area of the inlet stub (2) for the fluid supply line.

6. Filter arrangement (100) according to one of the above claims, wherein the filter seat (10) comprises exclusively a first plastic molded part as housing (1), a second plastic molded part as housing cover (4), fasteners (15) for attaching the housing cover (4) to the housing (1) and a third plastic molded part as inlet stub (2).

7. Filter arrangement according to one of the above claims, wherein an inflow protection is provided which is designed as cylindrical or sleeve-shaped frame and surrounds the filter element and is disposed either at the housing or is part of the filter element.

8. Filter arrangement (100) according to one of the above claims, wherein the filter element features a substantially cylindrical endless bellows (22) with a zigzag-folded filter medium, wherein the filter medium has alternately fold sections (22A, 22B) of different widths in such a way that inner fold edges (28) extend alternately on an inner peripheral line (UI) and outer fold edges (27) on an outer peripheral line (UA).

9. Process for producing a filter seat (10) for a filter arrangement (100) according to one of the above claims, comprising: providing a housing (1), creating an inflow opening (3 [sic?]) in the housing (3), and attaching, in particular welding, the inflow opening (2) to the opening (3).

## Revendications

1. Agencement de filtre (100) comprenant un logement de filtre (10) et un élément filtrant (18) rond disposé dans le logement de filtre (10), le logement de filtre (10) comprenant un boîtier (1) avec une partie de boîtier (1) essentiellement cylindrique avec une surface externe,
un orifice d'admission (3) disposé dans la surface externe,
une tubulure d'admission (2) attachée à l'orifice d'admission (3) pour l'accouplement d'une conduite d'alimentation en fluide, la tubulure d'admission (2) comprenant une surface de fixation (11) qui est attachée sur une face externe du boîtier (1) et couvrant l'orifice d'admission (3),
et un orifice d'évacuation (9) notamment axial, **caractérisé en ce que** la tubulure d'admission (2) est prévue de manière tangentielle sur la surface externe et présente une section d'acheminement du flux (12) s'étendant à travers l'orifice d'admission (3) dans l'espace intérieur du boîtier (1), la section d'acheminement du flux (12) s'approchant jusqu'à l'élément filtrant ou jusqu'à une protection d'afflux entourant l'élément filtrant de manière notamment annulaire.

2. Agencement de filtre selon la revendication 1, la tubulure d'admission (2) présentant une section transversale d'écoulement s'élargissant dans le sens d'écoulement.

3. Agencement de filtre (100) selon la revendication 1 ou 2, la tubulure d'admission (2) étant soudée ou collée sur le boîtier (1).

4. Agencement de filtre (100) selon l'une des revendications 1 à 3, le logement de filtre (10) étant exécuté en tant qu'un boîtier en plusieurs parties pour recevoir au moins un élément filtrant (18) essentiellement à symétrie de révolution.

5. Agencement de filtre (100) selon l'une des revendications 1 à 4, une section transversale d'écoulement étant plus large dans une zone de transition (26) entre la tubulure d'admission (2) et le boîtier (1) que dans une zone d'accouplement distale de la tubulure d'admission (2) pour la conduite d'alimentation en fluide.

6. Agencement de filtre (100) selon l'une des revendications précédentes, le logement de filtre (10) comprenant exclusivement une première pièce moulée en matière plastique en tant que boîtier (1), une deuxième pièce moulée en matière plastique en tant que couvercle de boîtier (4), éléments de fixation (15) pour attacher le couvercle de boîtier (4) sur le boîtier (1) et une troisième pièce moulée en matière plastique en tant que tubulure d'admission (2).

7. Agencement de filtre selon l'une des revendications précédentes, une protection d'afflux étant prévue qui est réalisée sous la forme d'un châssis cylindrique ou en forme de douille et entourant l'élément filtrant et étant disposée ou bien sur le boîtier ou bien faisant partie de l'élément filtrant.

8. Agencement de filtre (100) selon l'une des revendications précédentes, l'élément filtrant présentant un soufflet continu (22) essentiellement cylindrique avec un milieu filtrant plié en zigzag, le milieu filtrant ayant alternativement des sections de pliage (22A, 22B) de différentes largeurs de sorte qu'alternativement des arêtes de pliage (28) intérieures s'étendent sur une ligne périphérique (UI) intérieure et des arêtes de pliage (27) extérieures s'étendent sur une ligne périphérique (UA) extérieure.

9. Procédé de fabrication d'un logement de filtre (10) pour un agencement de filtre (100) selon l'une des revendications précédentes, comprenant: mise à disposition d'un boîtier (1) ; réalisation d'un orifice d'admission (3) dans le boîtier (3 [sic?]) ; et fixation, notamment soudage, de la tubulure d'admission (2) sur l'orifice (3).
